# EUROPEAN PATENT APPLICATION

(11) **EP 0 998 000 A2**
(43) Date of publication of application: **03.05.2000**
(21) Application number: 99308381.5
(22) Date of filing: 25.10.1999
(51) Int. Cl.: H02G 3/06

(54) **Modular wire harness protector**

(30) Priority: 23.10.1998 US 177992
(71) Applicant: Lear Corporation, Southfield, Michigan 48086 (US)
(72) Inventor: Yo, Iikubo, Ann Arbor, Michigan 48104 (US)
(74) Representative: Archer, Philip Bruce

(57) **Abstract**

A modular wire harness protector is formed by connecting together a plurality of protector modules each including a groove having a first and a second open end. Connectors disposed between each of the modules align the open ends of each module to define a continuous groove which accommodates the wire harness. By "snapping" together various modules the continuous groove can be made linear and non-linear at various locations such that the wire harness protector is specifically tailored to the individual wire harness.

## Description

### BACKGROUND OF THE INVENTION

The present invention generally relates to a wire harness protector, and more particularly to a module which connects to similar modules to form a specifically tailored protector to accommodate a wire harness.

A wire harness is commonly formed by bundling a plurality of electrical wires together prior to installation into the body of a vehicle. A wire harness connects many electrical components within the vehicle and therefore must be protected from damage. The harness must also be routed within the vehicle and held in place to protect the wire harness from abrasion with other components.

Within any one vehicle there are dozens of different shapes of harnesses. Also, the harnesses vary across vehicle lines. Thus, there are hundreds of possible harness shapes in production at any one time.

Known wire harness protectors are commonly molded of a rigid plastic material which protects and retains the wire harness in a prescribed condition. The protectors are commonly molded in one piece for a single application and location within the vehicle. However, it is relatively difficult and costly to manufacture the complex configurations of such one piece protectors.

Moreover, as the currently available wire harness protectors are specifically molded for each particular use they cannot be used in multiple locations or multiple vehicles. As noted above, there are hundreds of possible shapes. Known one piece wire harness protectors therefore increase the quantity of inventory which must be maintained, the assembly time required to select, retrieve, and install the proper protector, and the overall cost.

### SUMMARY OF THE INVENTION

This present invention provides a unique wire harness protector that avoids the problems of the prior art described above. The modular wire harness protector of the present invention can be configured to multiple mounting arrangements by connecting together two or more independent heterogenous or homogeneous modules in various arrangements.

In general terms, this invention is a wire harness protector which is formed by connecting together a plurality of modules to form a wire harness protector of various lengths and shapes. An individual module can be linear, or non-linear. Preferably, non-linear modules bend the wire harness to various angles, such as 45, 60 and 90 degrees. Each module includes a protector body having a groove for accommodating a portion of the wire harness which extends along the length of the module such that the groove has first and second open ends.

At least one connector is located on the protector body adjacent to an open end. The connector is preferably integrally molded with the protector body and can be of a female or a male configuration to allow snap together connection. By having a similar connector located adjacent each open end the modules can be strung together to form a protector of any desired length and shape.

Each module also preferably includes an integrally molded protective cover which is engageable with the protector body. As each module includes a cover, any combination of modules may be connected together and the wire harness is then protected within by simply closing each cover. Each module further includes a retainer which provides the protector with various mounting options.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.
Figure 1 is a perspective illustration of a linear wire harness protector module according to the present invention;
Figure 2 is a perspective illustration of a non-linear wire harness protector module according to the present invention;
Figure 3 is a perspective illustration of one wire harness protector assembled from a plurality of modules; and
Figure 4 is a perspective illustration of a second wire harness protector assembled from a plurality of modules.

### DETAILED DESCRIPTION OF THE PREFERRED EMBODIMENT

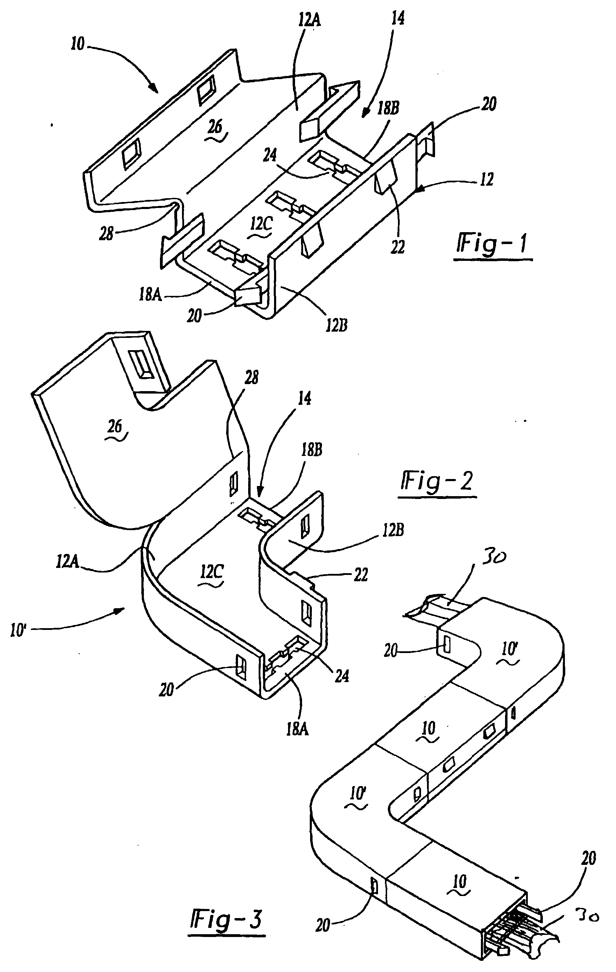

Figure 1 illustrates one wire harness protector module 10 of the present invention. The module 10 includes a protector body 12 having a groove 14 for accommodating a portion of a wire harness. The wire harness accommodating groove 14 extends the length of the protector body 12 thus defining a first open end 18A and a second open end 18B. Disposed adjacent to either or both open ends 18A-B is a connector 20. The module 10 preferably includes a protective cover 26 which engages the protector body 12 to cover the wire harness accommodating groove 14 thereby protecting the wire harness therein.

The protector body 12 preferably has a substantially planar first side 12A, a substantially planar second side 12B, and a substantially planar bottom 12C therebetween which defines the wire harness accommodating groove 14. The protector body 12 can also be formed as a substantially U-shaped cross section or in any other channel-like configuration to accommodate the wire harness.

The protector body 12 is formed to create a linear 10 (Figure 1) or a non-linear 10' (Figure 2) module such that the first open end 18A is linear or non-linear with the second open end 18B respectively. Preferably, non-linear modules 10' bend the wire harness to various angles, such as 45, 60 and 90 degrees. As the modules 10, 10' are provided in a plurality of configurations, lengths, and angles, specifically tailored wire harness protectors can be formed by connecting together a plurality of individual heterogenous or homogeneous modules.

Individual protector modules 10, 10' are connected to each other by connectors 20, located adjacent the first and second open ends 18A-B. The connectors 20 are preferably integrally molded to the protector body 12 in pairs of a male and/or female configuration. The connectors 20 thereby allow the individual modules to be simply "snapped" together forming a complete wire harness protector limited only by the type of modules connected together. In the simplified arrangement of the drawings, the linear module 10 has male connectors at both ends and the non-linear module 10' has female connectors at both ends. In fact, it may be preferable for each module to have female connectors at one end and a male connector at the other end. In this way the modules may be connected adjacent to one another.

To mount the wire harness protector to a surface such as a vehicle door interior, a retainer 24 is located on the protector body 12. The retainer 24 is preferably a plurality substantially parallel retainer slots located in the bottom 12C of the protector 12. However, one skilled in the art will recognize that the retainer 24 can also be of a male configuration, such as a standard "Christmas Tree" like retainer.

To protect and retain the wire harness within the protector body 12 a protective cover 26 is provided. The protective cover 26 is engageable with the protector body 12 by a lock mechanism 22. The protective cover 26 can be a separate component but, preferably, is attached to the protective body 12 by an integrally molded hinge 28. The protective cover 26 is thus engaged with the protector body 12 to cover at least a portion of the wire harness accommodating groove 14 and retain the wire harness-therein.

Referring to Figure 3, an example of a wire harness protector having a plurality of linear 10 and non-linear 10' protector modules is shown. The wire harness protector is formed by simply connecting together a plurality of protector modules 10, 10'. Each protector module 10,10' provides a wire harness accommodating groove 14 which defines the first 18A and second 18B open ends. Connectors 20 disposed between each protector module 10, 10' align the open ends 18A,18B to define a continuous groove 14 to accommodate the wire harness. By "snapping" together various protector modules 10, 10' the continuous groove can be linear or non-linear such that the protector is specifically tailored to the required location. Each protective cover 26 is engaged with each module 10 ,10' to cover the groove 14 and thereby protect the wire harness therein.

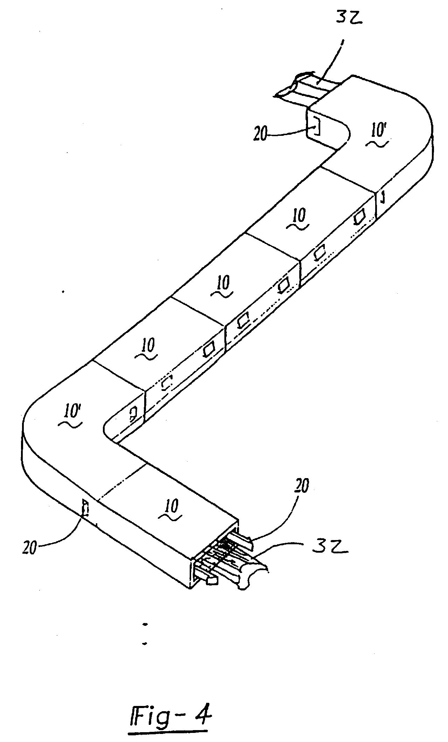

The wire harness 30 shown schematically in Figure 3 has a shape similar to that of the protector arrangement of Figure 3. It should be understood that particular protector shapes are tailored to conform to the shape of the associated harness. As an example, Figure 4 shows a somewhat different shape wherein three linear modules 10 are aligned between non-linear modules 10' to conform to the shape of the harness 32. Again, the modules may be of different angles, and are assembled as necessary to accommodate the particular harness.

The wire harness protector can then be mounting to a surface such as a vehicle body frame or the like by the standardized retainers 24 of each module 10. When the modular wire harness protector is fixedly mounted the wire harness is thus maintained in a desired position surrounded by the protector body 12 and protective cover 26 to safely retain the wire harness from the difficulty of damage.

The foregoing description is exemplary rather than limiting in nature. Obviously, many modifications and variations of the present invention are possible in light of the above teachings. It is, therefore, to be understood that within the scope of the appended claims the invention may be practiced otherwise than as specifically described.

## Claims

1. A wire harness protector module comprising:
a protector body having a groove for accommodating a portion of a wire harness, said groove having a first and a second open end; and
a connector disposed on said protector body adjacent to said first open end.

2. The wire harness protector module according to claim 1, wherein said protector body has a substantially planar first side, a substantially planar second side, a substantially planar bottom therebetween, the wire harness being accommodated therein.

3. The wire harness protector module according to claim 1, wherein said protector body is substantially U-shaped in cross section, the wire harness being accommodated therein.

4. The wire harness protector module according to claim 1, wherein said first open end is linear to said second open end.

5. The wire harness protector module according to claim 1, wherein said first open end is non-linear to said second open end.

6. The wire harness protector module according to claim 1, wherein a first connector is adjacent said first open end and a second connector is adjacent said second open end.

7. The wire harness protector module according to claim 1, further comprising a male connector adjacent said first open end.

8. The wire harness protector module according to claim 1, further comprising a female connector adjacent said first open end.

9. The wire harness protector module according to claim 1, further comprising a retainer for mounting said module to a surface.

10. The wire harness protector module according to claim 9, wherein said retainer comprises a plurality of substantially parallel slots located in a bottom of said protector.

11. The wire harness protector module according to claim 11, further comprising said protective cover engageable with said protector body to cover said groove.

12. The wire harness protector module according to claim 1, further comprising a protective cover attached to said protective body by an integrally molded hinge.

13. A wire harness comprising:
a wire harness;
a plurality of protector modules each including a groove having a first and a second open end, each said groove accommodating a portion of said wire harness; and
a connector disposed between each of said modules, said plurality of connected modules defining a continuous groove for accommodating said wire harness.

14. The wire harness protector according to claim 13, wherein said groove within at least one of said modules is linear.

15. The wire harness protector according to claim 13, wherein said groove within at least one of said modules is non-linear.

16. The wire harness protector according to claim 13, wherein said connectors snap-fit together.

17. The wire harness protector according to claim 13, wherein a first connector is adjacent said first open end and a second connector is adjacent said second open end.

18. The wire harness protector according to claim 13, further comprising a retainer attached to each of said modules for mounting said protector to a surface.

19. The wire harness protector according to claim 13, further comprising a plurality of protective covers, each of said covers engageable with each of said modules to cover said groove.

20. A method for protecting a wire harness, said method comprising the steps of:
connecting together a plurality of protector modules, each protector module having a groove, said plurality of protector modules forming a continuous groove;
inserting the wire harness into said continuous groove; and
covering said continuous groove with a plurality of protective covers, each protective cover engageable with each of said protector modules.
